# EUROPEAN PATENT SPECIFICATION

(11) **EP 1 529 381 B1**
(45) Date of publication and mention of the grant of the patent: **31.12.2008**
(21) Application number: 03700647.5
(22) Date of filing: 10.01.2003
(51) Int. Cl.: H04L 12/56

(54) **ARRANGEMENTS AND METHOD FOR CONTROLLING TRANSMISSION OF DATA BITS**
VERFAHREN UND EINRICHTUNGEN ZÜR ÜBERPRÜFUNG VON DATEN BITS ÜBERTRAGUNG
DISPOSITIFS ET PROCEDE PERMETTANT DE CONTROLER LA TRANSMISSION DE BITS DE DONNEES

(30) Priority: 18.10.2002 SE 0203104
(43) Date of publication of application: 11.05.2005
(73) Proprietor: TELEFONAKTIEBOLAGET LM ERICSSON (publ), 164 83 Stockholm (SE)
(72) Inventor: CHEMIAKINA, Svetlana, I-00175 ROME (IT); D'ANTONIO, Luigi, I-00131 ROME (IT); PETERSSON, Justus, S-116 41 Stockholm (SE); SKOG, Robert, S-165 76 HÄSSELBY (SE)
(74) Representative: Norin, Klas
(86) International application number: PCT/SE2003/000022
(87) International publication number: WO 2004/036845

(56) References cited:
- EP-A1- 0 948 168
- EP-A1- 0 955 749
- WO-A1-02/052800
- US-A- 6 151 300
- US-A1- 2002 080 721
- US-B1- 6 252 851

## Description

### FIELD OF THE INVENTION

The present invention relates to communications systems and methods, and more particularly, to controlling transmission of data bits in a bit transfer session.

### BACKGROUND OF THE INVENTION

Communication networks for packet based communication of information in the form of data bits are well known to the person skilled in the art. Certainly the Internet is the most widely known data communication network. A wide variety of communication protocols has been developed for handling data communication. Transport protocols are used for transferring data to the correct session. The transport protocols UDP (User Datagram Protocol) and TCP (Transmission Control Protocol) are used in the Internet. UDP is a connectionless protocol without flow control mechanisms, while TCP is a connection oriented protocol with flow control mechanisms that provides for reliable data transfer between two hosts.

The growing importance of mobile communication creates the demand to transfer data over wireless connections. The transfer of data over wireless links may give rise to many problems and difficulties not encountered when transferring data over fixed wired connections. The bandwidth over the air-interface is a scarce and limited resource. Therefore it is of interest to make efficient use of available radio resources. The bandwidth that is available for a radio connection in a mobile communication network may vary very fast due to changes in the characteristics of the air-interface caused by e.g. fading dips or shadowing, or due redistribution of the assigned bandwidth to the users in a cell. The very limited bandwidth over the air-interface and the changing bandwidth may make it difficult to provide acceptable quality-of service (QoS) to an end-user residing in a mobile system. The limited bandwidth may for instance result in long latencies which the end-user experiences as annoying.

There exist numerous solutions on how to improve the quality-of-service for an end-user who is residing in a mobile system.

In G. Côté, S. Shirani and F. Kossentini, "Optimal Mode Selection and Synchronisation for Robust Video Communications over Error-Prone Networks", IEEE Journal on Selected Areas in Communications, vol.18, No.6, June 2000 and in C. Hsu, A. Ortega and M. Khansari, "Rate Control for Robust Video Transmission over Burst-Error Wireless Channels", IEEE Journal on Selected Areas in Communications, vol. 17, No.5, May 1999, methods on how channel state information may be utilized for making a more precise judgement for server controlled bit-rate regulation are discussed.

In G. Cheung and T. Yoshimura, "Streaming Agent: A Network Proxy for Media Streaming in 3G Wireless Networks", IEEE Packet Video Workshop 2002, a streaming agent (SA) between a wired and a wireless network was introduced in order to minimize the impacts of congestion situations in a wired link under the assumption that the wireless link was almost loss-less. The SA sends timely feedback to a server to track the wired link state. Thus, the server may take more appropriate rate-switch decisions.

A. Schieder et al., "Resource Efficient Streaming Bearer Concept for GERAN", WPMC October 2002 in Honolulu, discloses a method on how buffer fullness in a client may be used as a trigger for feedback messages to a server. The goal was to efficiently utilize the radio resources in a GSM/EDGE radio access network and at the same time provide the end-user with good QoS.

US Patent No. 6,151,300 describes a method of extending ATM network flow control to hosts on LANs communicating over an ATM network. By means of coordinating the flow control mechanism on the transport layer with the flow control mechanism on the ATM layer situations which might lead to excessive packet loss and unstable behaviour may be avoided.

Pradeep Sudame B. R. Badrinath, "On Providing Support for Protocol Adaptation in Mobile Wireless Networks", Mobile Networks and Applications 0 (1999) describes adaptation mechanisms performed at the mobile host in response to changes in the network environment. An adaptation may for instance be a change of the TCP initial window size.

In document WO-A-02/052 800 the packet control unit indicates to the network mode, from which it receives data packets, the actual transmission rate of a specified data flow, as well as the buffering capacity, for that flow. Then the said network node adjusts it transmission rate for the indicated flow.

In European Patent Application EP1126716, the concept of using radio network information from the mobile network in order to faster and more accurately regulate the application bit rate for video data services is introduced.

Many of the prior art solutions mentioned above try to solve the QoS optimisation problem for the end-user in a mobile network primarily for UDP based services such as Streaming/Video services. For instance in EP1126716, a solution is presented which is targeted for UDP based services. However these methods do not address the optimisation issue for applications based on transport protocols with flow control mechanisms, such as TCP.

In addition many of the prior art solutions above are client-centric, that is, they make use of feedback messages from the end-user in the mobile system to control the quality-of-service for the end-user. A drawback with client-centric solutions is that it takes a fairly long time until the client, with certainty, detects a change in the available bandwidth on the connection over the air-interface. Since the radio environment is unstable the client is required to perform filtering or mean value calculations over long periods of time before it can send reliable feedback messages. Furthermore the feedback messages from the end-user must be transmitted over a radio connection to the control system which adds additional delay to the input data to the control system.

### SUMMARY OF THE INVENTION

An object of the present invention is to provide improved methods and arrangements for controlling the QoS for end-users and the use of radio resources for person-to-content services in a mobile system.

The above stated object is achieved by means of a method according to claim 1, a computer program product according to claim 14, an apparatus according to claim 15 and a system according to 28.

A bit transfer session that is set up between a client in a mobile system and an application server by means of a transport protocol with a flow control mechanism is associated with a number of flow control parameters. How these flow control parameters are set is crucial for the quality-of-service of the session and for the utilization of available radio resources. The invention makes use of feedback information from a radio resource managing unit to set and update flow control parameters continuously throughout the session. According to the present invention the radio resource managing entity informs a network entity that controls the flow control parameters of the bandwidth that is allowed for the session on the air interface towards the client. This bandwidth information facilitates optimization of the flow control parameters which allows for enhanced QoS and efficient use of available radio resources.

According to a first aspect of the present invention a method is provided for controlling transmission of data bits in a bit transfer session for transmitting data information from an application server to a client, said bit transfer session involving bit transfer over a wireless communications link by means of a transport protocol with a flow control mechanism. The method includes the step of a network entity receiving, continuously throughout the session, information from a radio resource managing unit about the bandwidth on the wireless link that the bit transfer session currently is allowed to use, and the step of the network entity updating at least one parameter relating to the flow control mechanism of the transport protocol in response to said received information, so as to control the transmission rate of the session in accordance with the received information.

According to a second aspect of the present invention an apparatus is provided for controlling transmission of data bits in a bit transfer session for transmitting data information from an application server to a client, said bit transfer session involving bit transfer over a wireless communications link by means of a transport protocol with a flow control mechanism. The apparatus is included in a network entity. The apparatus includes reception means for continuously throughout the session receiving information from a radio resource managing unit about the bandwidth on the wireless link that the bit transfer session currently is allowed to use. Furthermore the apparatus also includes parameter setting means for continuously throughout the session updating at least one parameter relating to the flow control mechanism of the transport protocol in response to the received information, so as to control the transmission rate of the session in accordance with the received information.

An advantage of the present invention is that it assists in optimally balancing the offered traffic over the air-interface with the back-end for person-to-content services over the packet switched domain leading to a better utilisation of scarce radio resources.

Another advantage of the present invention is that since the feedback information that is used for controlling the flow control parameters is provided continuously throughout the session from the radio resource managing entity which is located in the radio access network, the flow control parameters will be updated based on current information. This allows for better parameter settings compared to prior art solution where the flow control parameters are set only once at the beginning of the session based on historical data from previous sessions. Since the feedback information used in the present invention is communicated from the radio access network to the network entity controlling the flow control parameters the feedback information will not be subjected to the as much delay as in the client-centric solutions discussed above. The radio access network detects changes in the available bandwidth of the session faster than the client does and there is no need to communicate the feedback information over the air-interface.

The continuous monitoring and updating of flow control parameters according to the present invention allows for good QoS throughout the entire session and not just at the beginning of the session. In prior art solutions wherein parameter settings are not updated during the session, there is a risk that the QoS may deteriorate during the session if the radio conditions experienced by the session changes. Radio conditions may change very rapidly and thus it is more important to update parameter settings of sessions involving an air interface than those of sessions which are entirely based on wired connections.

A further advantage of the present invention is that it makes use of network feedback for each session separately which is used to update the flow control parameters of each session individually. Thus the parameter settings may be specifically adapted to optimize the QoS for each session. According to some prior art solutions flow control is handled for groups of sessions. Even though the prior art solutions allows few flow control decisions compared to the invention, these solutions may lead to poor quality-of-service for a particular client who is locally experiencing radio conditions that are much worse than those of other clients in the same group.

Yet another advantage of the present invention is that the fidelity of the transmission rate to the available bit rate over the air interface may be increased. The present invention allows for both up-switch and down-switch of the transmission rate based on the network feedback information from the radio resource managing unit. The adaptation of the transmission rate according to the invention may be made smoother more accurately than in prior art solutions. The present invention avoids unnecessary application of congestion mechanisms which may cause drastic down-switch of the transmission rate. In general the present invention reduces extreme decisions based on misinterpretations of network conditions.

Yet a further advantage of the present invention is that it is applicable to all types of applications. The solution according to the present invention makes the applications network 'agnostic', meaning that the developers may put their focus on tailoring the applications for the mobile environment and does not have to take the transport media of the network into particular consideration.

Since the present invention allows for quicker and more accurate adaptation of the throughput to the current available bandwidth on the air-interface, the risk for overflow in the radio resource managing unit, such as the RNC or BSC is reduced. Thus an additional advantage of the present invention is that the sizes of buffers in the radio resource managing unit may be minimize.

Further advantages and objects of embodiments of the present invention will become apparent when reading the following detailed description in conjunction with the drawings.

### BRIEF DESCRIPTION OF THE DRAWINGS

Fig. 1 is a schematic block diagram illustrating a communication session between a client and an application server according to prior art.
Fig. 2 is a schematic block diagram illustrating a communication session between a client and an application server wherein the present invention is used.
Fig. 3 is a schematic diagram illustrating a comparison of the throughput of the sessions illustrated in Fig. 1 and Fig. 2.
Fig. 4 is a schematic block diagram illustrating an embodiment of the present invention in a UMTS system.
Fig. 5 is a flow diagram illustrating transmission rate adaptation based on network feedback according to the present invention.
Fig. 6 is a block diagram illustrating an alternative embodiment of the present invention in a UMTS system.
Fig. 7 is a combined block and flow diagram illustrating content transformation based on network feedback according to the present invention.

### DETAILED DESCRIPTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

The present invention is applicable to person-to-content packet switched services in a mobile system, and particularly to such services which are based on a transport protocol with a flow control mechanism. Such services comprise packet communication between a user equipment of an end-user and an application server. The mobile system includes a mobile network such as a WCDMA, CDMA2000, Wireless LAN or GPRS network in which the user equipment resides. An example of a transport protocol with a flow control mechanism is the TCP. The flow control mechanism of the TCP comprises a number of flow control parameters as is well known to a person skilled in the art. Examples of TCP flow control parameters are window size and segment size. The transmission of data bits over a TCP connection may be controlled by means changing the TCP flow control parameters.

When a communication session is set up between the mobile user equipment and the application server, the available bandwidth over the air interface will normally be the limiting factor on the bit rate of the session. The characteristics of the air-interface, e.g. fading dips and shadowing, may have negative consequences for the end-user. This is especially true for applications that use the TCP protocol as a transport bearer. For instance, a long latency over the air-interface may trigger the TCP congestion avoidance mechanism, leading to less bandwidth for the session and resulting in a very lousy performance for the end-user. On the other hand, if the end-user will temporarily get increased bandwidth over the air-interface, this may most likely not speed up the TCP connection to the same extent, implying that scarce radio resources will not be utilised. Since the radio resources on the air interface are scarce resources which it is of interest to utilize as efficiently as possible, a more efficient use of the available radio resources will most likely improve the quality-of-service of the end-users.

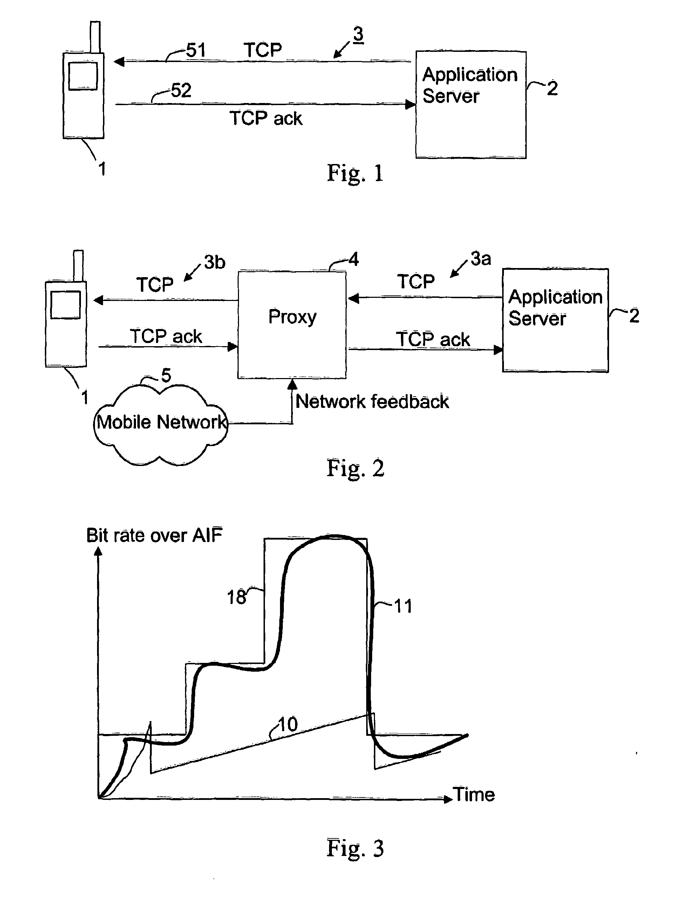

Fig. 1 illustrates schematically a communication session between a client in a user equipment 1 and an application server 2 according to prior art. Here the application server 2 is a Web Server. The session is set up by means of a TCP link 3 between the client 1 and the application server 2. When the client is browsing or downloading information from the application server, the client acknowledges the reception of data which thereby indicates the quality of the reception. The application server uses this information from the acknowledgments to adapt TCP transmission parameters, such as e.g. window size or segment size, to the transmission conditions over the TCP link.

A problem with the approach in Fig. 1 is that when the transmission link includes a radio connection there is a risk that bad radio connection conditions including many re-transmissions are misinterpreted by the application server 2 as congestion, thereby triggering the TCP congestion avoidance mechanism. Also, the radio conditions may change very fast, but the feedback in the form of acknowledgements comes relatively late, which further reduces the ability of the server to adequately react to changed radio transmission conditions. These are drawbacks that occur since the TCP transmission mechanism was not designed for radio transmission.

Fig. 2 is a schematic block diagram illustrating the basic principles of a communication session wherein the present invention is used. A communication session is set up between the client 1 and the application server 2 via a proxy 4 by means of TCP connections 3a and 3b. The TCP connection 3b involves transmission over a radio link in a mobile network 5. According to the present invention the mobile network reports network feedback data regarding the quality-of service of the radio link transmission to the proxy. The proxy uses the network feedback data to change TCP parameter settings, such as TCP window size and segment size, of the TCP connection 3b. The network feedback may also be used to decide how to acknowledge reception to the application server over the TCP connection 3a.

The network feedback data that is reported to the proxy is information about the bandwidth that the radio resource managing unit of the mobile network has decided that the session is allowed to use over the air-interface.

Although Fig. 2 illustrates use of the invention for a session that is set up via a proxy and two TCP connections 3a and 3b, the use of a proxy is not essential to the invention. If the session is set up directly between the application server and the client, without an intermediate proxy, the invention may be implemented such that the network feedback is provided directly to the application server. The application server can then use the network feedback to adequately adapt the TCP parameters of the session.

Fig. 3 is a schematic diagram illustrating a comparison of the throughput using arrangements according to Fig. 1 and Fig. 2 respectively. The rectangular curve 18 illustrates the bandwidth that the radio resource managing unit of the mobile network has decided that the session is allowed to use over the air-interface. Curve 10 illustrates the throughput curve of the prior art arrangement in Fig. 1 and the bold curve 11 illustrates the throughput curve of the arrangement according to the invention in Fig. 2.

The curve 10 illustrates that the transmission rate first increases exponentially, until the maximum available bit rate over the air interface has been reached. When this occurs, the client starts reporting "Not received", which is interpreted by the application server 2 in Fig. 1 as congestion. Thus the application server applies the congestion avoidance mechanism whereby the transmission rate is reduced substantially. Then the application server starts to very slowly increase the transmission rate linearly. This behaviour of the application server is not in conformity with the actual situation over the radio link.

In contrast, in Fig. 2, the proxy 4 (or the server 2 in an embodiment where the network feedback is directly provided to the server) may take more adequate and faster measures since it receives radio link information earlier which provides a more accurate description of the radio transmission conditions. This is illustrated by the bold curve 11, which illustrates that the throughput rises faster when the network feedback according to the present invention is used and that the throughput overall is higher leading to better quality-of-service for the end-user. An increase in the available bandwidth over the air interface will quickly result in greater throughput when the arrangement in Fig. 2 is used. By tuning TCP flow control parameters correctly, it may even be possible to adjust the transmission rate so that it is long term stable.

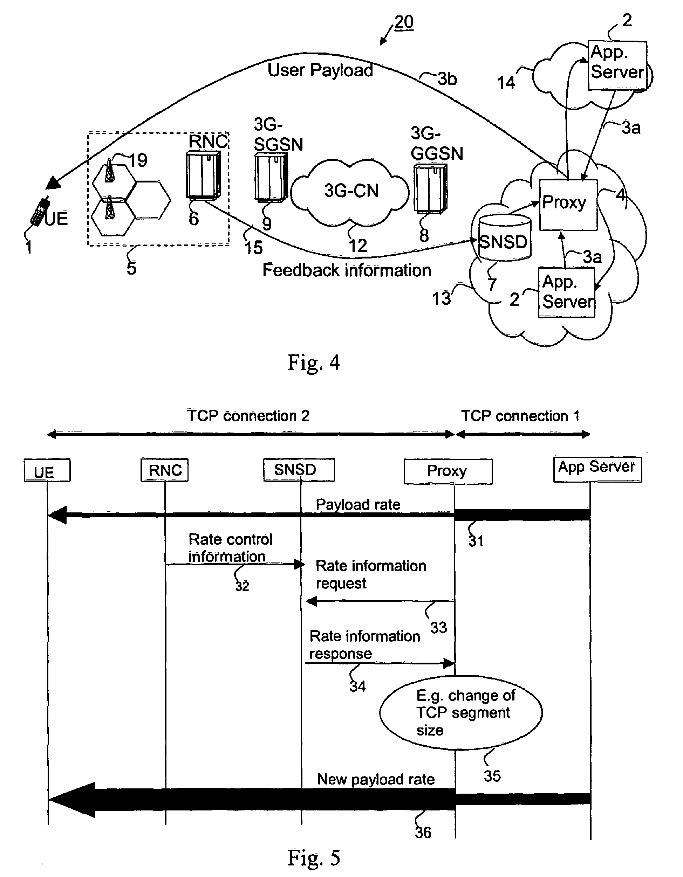

Fig. 4 illustrates an embodiment of the present invention in a UMTS system 20. The system includes a radio access network 5 comprising a number of Base Transceiver Stations (BTS) 19 and at lest one Radio Network Controller (RNC) 6. The system further includes a Serving GPRS Support Node (SGSN) 9 and a Gateway GPRS Support Node (GGSN) 8, which are nodes in a Core Network (CN) 12 that provides a connection between the radio access network 5 and a Service Network (SN) 13. The characteristics and function of the mentioned units in the UMTS system are well known to a person skilled in the art and will therefore not be explained herein.

The Service Network includes an application server 2, a proxy 4 and a Service Network Session Database (SNSD) 7. A bit transfer session may be set up between the application server 2 in the SN and a client on a User Equipment (UE) 1 by means of connections 3a, 3b that pass through the proxy 4, the GGSN 8, the CN 12, the SGSN 9 and the radio access network 5. Alternatively the session may be set up between the UE 1 and an application server 2 in an external network 14 with which the proxy communicates. The connections 3a, 3b may for instance be TCP connections or connections based on another type of transport protocol with some kind of flow control mechanism.

As explained above the present invention provides improved means for controlling the transmission rate of the session, which allows for end-user quality-of -service optimization. According to the embodiment of present invention in Fig. 4, information about the allowed bandwidth over the air-interface used for the session is sent from the RNC 6 to the SNSD 7 over a connection 15. The SNSD is connected to the proxy 4 and communicates the bandwidth information from the RNC to the proxy. The proxy has the capabilities of optimising the end-user's quality-of-service on the basis of the obtained bandwidth information from the RNC and its own internal algorithms.

The SNSD 7 may be arranged to either temporarily store the bandwidth information from the RNC or to directly relay the information via the proxy to the application server 2. When the UE has activated a packet data protocol (PDP) context, this PDP context includes among other information an access point name (APN). The APN gives a logical connection between the UE and the SNSD. The SNSD may for instance store the following information per UE:
- IP-address of the UE
- bit rate
- other information, e.g., the user's MSISDN, which may be of interest for other purposes than the present invention.

Since the SNSD provides the proxy with the currently allowed bit rate over the air-interface, the proxy has the ability to set the TCP flow control parameters such as e.g. the segment/window sizes to optimally fit the radio resource situation.

The flow diagram in Fig. 5 illustrates an example of how one may optimise the end-user's QoS for TCP based services, such as downloading or web surfing, according to the present invention.

Fig. 5 illustrates a procedure of TCP adaptation wherein the TCP link between the UE and the application server has been split in two parts, TCP connection 3a and 3b, respectively as illustrated in Fig. 4.

The initial conditions for the example illustrated in Fig. 5 are these:
The application server sends payload at a certain bit rate according to the TCP mechanisms specified by IETF, step 31. Due to limitations over the air-interface the proxy is not allowed to relay the incoming payload at the same pace as it arrives. Therefore, the proxy temporarily stores the incoming payloads in a cache (not shown in the figure) and acknowledges the Application Server by sending acknowledgements (ACKs), as if the payloads had been received by the client. By doing so one decreases the risk that the TCP congestion control mechanism will be employed. At the same time one minimizes the total download time for the requested object/file.

According to the present invention the following steps are performed in the example of Fig. 5:
Step 32: The radio resource managing unit, e.g. the RNC, has discovered that the system has spare capacity and thus informs the SNSD that a specific session may enjoy a new and higher bit rate.
Step 33: The proxy may periodically check the SNSD about the currently allowed transport bit rate for the given session.
Step 34: In this case the proxy gets a response from the SNSD saying that the RNC allows for a higher bit rate for the given session.
Step 35: The proxy's internal wireless TCP optimisation algorithms adapt to the new situation. Note that the bit rate out from the proxy may temporarily by greater than the incoming bit rate, since it has "old" payload in its cache.
Step 36: The end-user receives the content at the new bit rate.

Note that this picture illustrated in Fig. 5 is a "snapshot" of the behaviour to the network feedback based rate adaptation according to the present invention. During a whole session the procedure illustrated in Fig. 5 may be employed many times as the allowed bit rate of the session over the air interface changes.

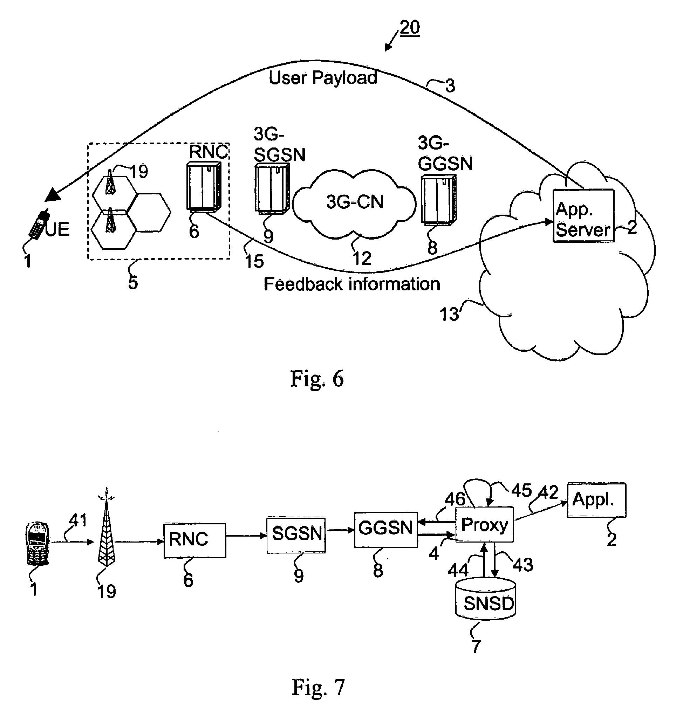

Fig. 4 and Fig. 5 illustrated an embodiment of the present invention wherein a proxy was used and the TCP connection between the client and the application server was split in two parts: one part between the client and the proxy and one part between the proxy and the application server. The use of a proxy may be advantageous as mentioned above since it may reduce the risk that the TCP congestion avoidance mechanism is employed. However, as mentioned above, the use of a proxy is not a requirement for the present invention. According to an alternative embodiment of the present invention, the TCP connection 3 goes directly from the UE to the application server as illustrated in Fig. 6. Likewise the bandwidth information can go directly from the radio resource managing unit to the application server, without the use of an intermediate database such as the SNSD. If a proxy is used the proxy may be located in the Service Network 13 as illustrated in Fig. 4 or in the Core Network 12.

According to an alternative embodiment of the present invention the feedback information from the radio resource managing unit is sent to the application server or the proxy via the UE 1. Drawbacks with this embodiment are that the feedback information obviously is further delayed and that it requires additional work from the UE compared to the previously described embodiment However an advantage of looping the feedback information via the client is that an implementation of such an embodiment may require fairly small changes in existing protocols.

The adaptation of the transmission rate based on the network feedback from the radio resource managing unit may be complemented with content transformation as an additional measure for providing good quality-of-service to the end-user. Imagine that a user is in the beginning of downloading a large picture and that the cell he is residing in is currently congested. The user will probably get annoyed with the long latency it takes for the download and will thus disconnect the session. An alternative to this may be to speed up the downloading process by filtering out some information in the picture. Obviously the rendered quality of the picture will be decreased compared to the whole information being transmitted. However, it can be argued that the latency may have more severe impact on the end-users' total quality-of-service experience than anything else. The network feedback from the radio resource managing unit assists in correctly determining when to apply content transformation.

Fig. 7 illustrates schematically the relevant steps involved in content transformation. The steps are as follows:
Step 41: The UE 1 requests content from the application server 2, which could be e.g. a MMS Server. The request is directly or indirectly captured by the proxy 4.
Step 42: The proxy 4 fetches the content from the application server.
Step 43: Before sending the content to UE 1 the proxy 4 looks in the SNSD 7 to find out what the current allowable bit rate for the UE is over the air interface. The IP-address associated with the UE can be used to find session information about the UE in SNSD.
Step 44: The current allowable bit rate is received in the proxy.
Step 45: The proxy 4 determines by means of some QoS algorithm and the current allowable bit rate as input that content transformation is needed for the content before delivery to the UE 1 in this case. An example of such a transformation can, as mentioned, be a reduction of the information bits of a picture in order to reduce the transmission time.
Step 46: The content is transformed as required and delivered to the UE 1.
It may be of interest to use the network feedback information from the radio resource managing unit according to the present invention for some sessions, but not for others. Thus the invention is preferably implemented such that the resource managing entity, e.g. the radio recourse managing unit is notified whether or not a session requires the feedback service. This notification may be accomplished during i) the configuration or ii) the session set-up.

The embodiments of the present invention described above are implementations in a UMTS system. However the present invention may be used in many different types of packet switched networks. For instance the invention may also be implemented in a 2G-system such as a GSM system.

The radio resource managing unit which according to the present invention provides network feedback that may be used for transmission rate adaptation is the entity that controls the radio resources on the air interface. In a UMTS system this entity is the RNC and in a GSM system this unit is the BSC. The radio resource managing unit may have other names in other types of networks. It is the radio resource managing unit that has knowledge about the current physical limitations of the air interface, load information relating to different ongoing sessions competing for radio resources in a cell and other factors which may affect the bandwidth that a particular session may be allowed to use on the air interface. Based on its knowledge, the radio resource managing unit determines the bandwidth which it communicates as network feedback and which indicates the bandwidth that a given session is allowed to use over the air interface.

There are different implementation alternatives as to when the radio resource managing unit sends bandwidth information in the form of network feedback to an application server or a proxy. However, it is important to the present invention that the radio resource manager monitors the air interface and reports the current allowed bandwidth. continuously throughout the session in order to allow for optimal transmission rate adaptation. By continuously is here meant that the radio resource manager reports the allowed bandwidth of the session to the unit(s) that sets the flow control parameters that affect the transmission rate of the session such that the transmission rate may be adapted when the radio conditions on the air interface changes during the session. This might imply that the radio resource managing unit sends network feedback to a database or a parameter setting entity each time it changes the bandwidth that the session is allowed to use over the air interface. Another alternative is that the radio resource managing unit sends information about the current allowed bandwidth of the session at predetermined intervals, for instance every 10 seconds. A drawback with the latter alternative is that the system may miss to adapt to a change of allowed bandwidth.

The adaptation of the flow control parameters that affect the transmission of bits in the session is carried out based on the bandwidth information from the radio resource managing unit. For this purpose some kind of optimization algorithm is advantageously used wherein the bandwidth information from the radio resource managing unit is one parameter. The choice and characteristics of the optimization algorithm is outside the scope of the present invention. The parameter setting entity, e.g. the application server or the proxy may receive the network feedback on the initiative of the radio resource managing unit or may request the information from an intermediate database, such as the SNSD, or from the radio resource managing unit itself. The parameter setting entity will preferably update the flow control parameters affecting the transmission rate over the air interface as soon as it becomes aware of a changed allowable bandwidth.

The adaptation of flow control parameters according to the present invention may result in either an up-switch or a down-switch of the transmission rate depending on the bandwidth information received from the radio resource managing unit. The received bandwidth information makes it possible to provide an increase or decrease of the transmission rate that is appropriate in view of the available radio resources. By means of the present invention the transmission rate may be adapted more smoothly than by means of many prior art solutions. A more smooth decrease of the transmission rate makes it possible to avoid application of congestion avoidance mechanisms in many cases. As mentioned above congestion avoidance mechanisms may have a detrimental effect on the quality-of-service. Thus the present invention allows for a more accurate adaptation of the transmission rate to the prevailing radio conditions and better and more even end-user quality-of service.

The present invention allows for minimization of buffer sizes in the radio resource managing unit such as the RNC or BSC. This is possible since the risk for overflow in the radio resource managing unit is reduced when the transmission rate is adapted to the available bandwidth more quickly and accurately. Assume for instance that an RNC is forced to reduce the available bandwidth from 64 to 32 Kb/s. Without network feedback there is a risk that the application server or proxy continues to transmit at 64 Kb/s for some time while the RNC merely is able to feed the air-interface at 32 Kb/s. This means that the buffer in the RNC is starting to fill up until the application server or proxy adjusts its transmission rate. If the buffer becomes full the RNC is forced to discard data and the discarded data must be retransmitted. With network feedback the application server or proxy will become aware of the decrease in the available bandwidth faster and will quickly reduce the transmission rate. Thus the RNC requires smaller buffers when the network feedback according to the present invention is employed.

As mentioned above the present invention may reduce the risk that a congestion avoidance mechanism is employed. A congestion avoidance mechanism is a requirement of TCP as specified by the IETF. However on connections within the domain of an operator the operator may choose to disable some of the requirements of the IETF on the Internet. Thus, when the present invention is used, an operator may choose to employ a modified TCP connection between a proxy and a UE with the congestion avoidance mechanism completely disabled. This allows for a bolder setting of parameters on the modified TCP connection.

When implementing the present invention in existing communication systems existing software and/or hardware will have to be modified as will be understood by the person skilled in the art. In most cases the modifications will mainly be software modifications. The radio resource managing unit must be adapted so that it can communicate the network feedback according to the present invention to another unit, such as the SNSD, the proxy or the application server. In the embodiment illustrated in Fig. 4, one way to convey the rate information to the SNSD is to use the established GTP-U tunnel between the RNC and the GGSN. This, however, requires extra functionalities in the GGSN. Another approach may be to directly inform the RNC about the SNSD's IP address upon i) configuration or ii) session set-up. By doing so, the RNC updates the SNSD about valid bit rate without any interrogation from an intermediate node. Furthermore, the parameter setting unit, which according to the invention updates session parameters based on the network. feedback, must be adapted to be able to receive and interpret the network feedback and to be able to adapt the parameters based on the received network feedback. It will be apparent to the person skilled in the art how the present invention may be implemented using known hardware and software means. The network feedback mechanism according to the present invention may be implemented using a separate protocol created for this purpose.

In the drawings and specification, there have been disclosed typical preferred embodiments of the invention and, although specific terms are employed, they are used in a generic and descriptive sense only and not for purposes of limitations, the scope of the invention being set forth in the following claims.

## Claims

1. A method for controlling transmission of data bits in a bit transfer session for transmitting data information from an application server (2) to a client (1), said bit transfer session involving bit transfer over a wireless communications link by means of a transport protocol with a flow control mechanism **characterised by** the steps of:
a network entity (2, 4) receiving (32, 34), continuously throughout said session, information from a radio resource managing unit (6) about the bandwidth on the wireless link that the bit transfer session currently is allowed to use; and
said network entity updating (35) at least one parameter relating to the flow control mechanism of the transport protocol in response to said received information, so as to control the transmission rate of the session in accordance with said received information.

2. The method for controlling transmission of data bits according to claim 1 **characterised by** the network entity (2, 4) receiving said information from the radio resource managing unit each time the bandwidth on the wireless link that the bit transfer session is allowed to use has changed.

3. The method for controlling transmission of data bits according to claim 1 **characterised by** the network entity (2, 4) receiving said information from the radio resource managing unit at predetermined intervals.

4. The method for controlling transmission of data bits according to any of claims 1-3 **characterised by** said network entity being the application server (2).

5. The method for controlling transmission of data bits according to any of claims 1-3 **characterised by** said bit transfer session being set up between the application server (2) and the client (1) via a proxy (4) and by said network entity being the proxy.

6. The method for controlling transmission of data bits according to claim 5 **characterised by** said proxy (4) sending acknowledgements of packets received from the application server (2) during said bit transfer session and by said acknowledgements being dependent on said received information from the radio resource managing unit (6).

7. The method for controlling transmission of data bits according to any of the previous claims **characterised by** said network entity (2, 4) receiving said information from the radio resource managing unit (6) via the client (1).

8. The method for controlling transmission of data bits according to any of the previous claims **characterised by** said transport protocol being TCP.

9. The method for controlling transmission of data bits according to claim 8 **characterised by** said at least one parameter being the TCP window size and/or the TCP segment size.

10. The method for controlling transmission of data bits according to any of the previous claims **characterised by** the further step of transforming the data to be transmitted during the bit transfer session in response to said received information from the radio resource managing unit (6).

11. The method for controlling transmission of data bits according to any of the previous claims **characterised by** updating said at least one parameter such that the bandwidth on the wireless link that is utilized by the bit transfer session increases or decreases.

12. The method for controlling transmission of data bits according to any of the previous claims **characterised by** the radio resource managing unit being a radio network controller (6).

13. The method for controlling transmission of data bits according to any of claims 1-11 **characterised by** the radio resource managing unit being a base station controller.

14. Computer program product loadable into a memory of a digital computer device, including software code portions for performing the method of one of claims 1-13 when said computer program product is run on said computer device.

15. An apparatus for controlling transmission of data bits in a bit transfer session for transmitting data information from an application server (2) to a client (1), said bit transfer session involving bit transfer over a wireless communications link by means of a transport protocol with a flow control mechanism **characterised in that** the apparatus is included in a network entity (2, 4) and **in that** the apparatus includes:
reception means for continuously throughout said session receiving information from a radio resource managing unit (6) about the bandwidth on the wireless link that the bit transfer session currently is allowed to use; and
parameter setting means for updating at least one parameter relating to the flow control mechanism of the transport protocol in response to said received information, so as to control the transmission rate of the session in accordance with said received information.

16. The apparatus for controlling transmission of data bits according to claim 15 **characterised in that** said reception means is arranged to receive said information from the radio resource managing unit (6) each time the bandwidth on the wireless link that the bit transfer session is allowed to use has changed.

17. The apparatus for controlling transmission of data bits according to claim 15 **characterised in that** said reception means is arranged to receive said information from the radio resource managing unit (6) at predetermined intervals.

18. The apparatus for controlling transmission of data bits according to any of claim 15-17 **characterised in that** said reception means and said parameter setting means are included in the application server (2).

19. The apparatus for controlling transmission of data bits according to any of claims 15-17 **characterised in that** said bit transfer session is set up between the application server (2) and the client (1) via a proxy (4) and **in that** said reception means and said parameter setting means are included in the proxy.

20. The apparatus for controlling transmission of data bits according to claim 19 **characterised in** the said proxy (4) is arranged to send acknowledgements of packets received from the application server (2) during said bit transfer session, which acknowledgements are dependent on said information from the radio resource mananaging unit (6).

21. The apparatus for controlling transmission of data bits according to any of claims 15-20 **characterised in that** said reception means are arranged to receive said information from the radio resource managing unit (6) via the client (1).

22. The apparatus for controlling transmission of data bits according to any of claims 15-21 **characterised in that** said transport protocol is TCP.

23. The apparatus for controlling transmission of data bits according to claim 22 **characterised in that** said at least one parameter is the TCP window size and/or the TCP segment size.

24. The apparatus for controlling transmission of data bits according to any of claims 15-23 **characterised in that** the apparatus further includes means for transforming the data to be transmitted during the bit transfer session in response to said information from the radio resource managing unit (6).

25. The apparatus for controlling transmission of data bits according to any of the claims 15-24 **characterised in that** said parameter setting means is arranged to update said at least one parameter such that the bandwidth on the wireless link that is utilized by the bit transfer session increases or decreases.

26. The apparatus for controlling transmission of data bits according to any of the claims 15-25 **characterised in that** the radio resource managing unit is a radio network controller (6).

27. The apparatus for controlling transmission of data bits according to any of the claims 15-25 **characterised in that** the radio resource managing unit is a base station controller.

28. A system for controlling transmission of data bits in a bit transfer session involving bit transfer over a wireless communications link by means of a transport protocol with a flow control mechanism **characterised in that** the system includes:
an apparatus according to any of claims 14-25, and
a radio resource managing unit (6) arranged to continuously throughout said session send information about the bandwidth on the wireless link that the bit transfer session currently is allowed to use to the reception means of said apparatus.

29. The system for controlling transmission of data bits according to claim 27 **characterised in that** said system further includes a storing unit (7), **in that** the radio resource managing unit (6) is arranged to send said information to said apparatus via said storing unit and **in that** said storing unit is arranged to relay said information from said radio resource managing unit to said apparatus.

## Patentansprüche

1. Verfahren zum Steuern der Übertragung von Datenbits in einer Bittransfersitzung zum Übertragen von Dateninformation von einem Anwendungsserver (2) an einen Client (1), wobei die Bittransfersitzung Bittransfer über einen drahtlosen Kommunikationslink einschließt mittels eines Transportprotokolls mit einem Flusssteuerungsmechanismus, **gekennzeichnet durch** folgende Schritte:
eine Netzeinheit (2, 4), die während der Sitzung Information von einer Funkressourcen-Verwaltungseinheit (6) über die Bandbreite auf dem drahtlosen Link kontinuierlich empfängt (32, 34), den die Bittransfersitzung gegenwärtig benutzen darf; und
die Netzeinheit mindestens einen Parameter, der den Flusssteuerungsmechanismus des Transportprotokolls betrifft, als Antwort auf die empfangene Information aktualisiert (35), um die Übertragungsrate der Sitzung gemäß der empfangenen Information zu steuern.

2. Verfahren zum Steuern der Übertragung von Datenbits nach Anspruch 1, **dadurch gekennzeichnet, dass** die Netzeinheit (2, 4) die Information von der Funkressourcen-Verwaltungseinheit jedes Mal dann erhält, wenn sich die Bandbreite auf dem drahtlosen Link geändert hat, den die Bittransfersitzung benutzen darf.

3. Verfahren zum Steuern der Übertragung von Datenbits nach Anspruch 1, **dadurch gekennzeichnet, dass** die Netzeinheit (2, 4) die Information von der Funkressourcen-Verwaltungseinheit in vorbestimmten Intervallen empfängt.

4. Verfahren zum Steuern der Übertragung von Datenbits nach einem der Ansprüche 1-3, **dadurch gekennzeichnet, dass** die Netzeinheit der Anwendungsserver (2) ist.

5. Verfahren zum Steuern der Übertragung von Datenbits nach einem der Ansprüche 1-3, **dadurch gekennzeichnet, dass** die Bittransfersitzung zwischen dem Anwendungsserver (2) und dem Client (1) über einen Proxy (4) aufgebaut wird und dass die Netzeinheit der Proxy ist.

6. Verfahren zum Steuern der Übertragung von Datenbits nach Anspruch 5, **dadurch gekennzeichnet, dass** der Proxy (4) Bestätigungen von Paketen sendet, die vom Anwendungsserver (2) während der Bittransfersitzung empfangen wurden, und dass die Bestätigungen von der Information abhängen, die von der Funkressourcen-Verwaltungseinheit (6) empfangen wurde.

7. Verfahren zum Steuern der Übertragung von Datenbits nach einem der vorhergehenden Ansprüche, **dadurch gekennzeichnet, dass** die Netzeinheit (2,4) die Information von der Funkressourcen-Verwaltungseinheit (6) über den Client (1) empfängt.

8. Verfahren zum Steuern der Übertragung von Datenbits nach einem der vorhergehenden Ansprüche, **dadurch gekennzeichnet, dass** das Transportprotokoll das TCP ist.

9. Verfahren zum Steuern der Übertragung von Datenbits nach Anspruch 8, **dadurch gekennzeichnet, dass** der mindestens eine Parameter die TCP-Fenstergröße und/oder die TCP-Segmentgröße ist.

10. Verfahren zum Steuern der Übertragung von Datenbits nach einem der vorhergehenden Ansprüche, durch den weiteren Schritt **gekennzeichnet**, dass die zu übertragenden Daten während der Bittransfersitzung als Antwort auf die von der Funkressourcen-Verwaltungseinheit (6) empfangene Information transformiert werden.

11. Verfahren zum Steuern der Übertragung von Datenbits nach einem der vorhergehenden Ansprüche, **dadurch gekennzeichnet, dass** der mindestens eine Parameter aktualisiert wird, sodass die Bandbreite auf dem drahtlosen Link, der durch die Bittransfersitzung genutzt wird, größer oder kleiner wird.

12. Verfahren zum Steuern der Übertragung von Datenbits nach einem der vorhergehenden Ansprüche, **dadurch gekennzeichnet, dass** die Funkressourcen-Verwaltungseinheit ein Funknetzcontroller (6) ist.

13. Verfahren zum Steuern der Übertragung von Datenbits nach einem der Ansprüche 1-11, **dadurch gekennzeichnet, dass** die Funkressourcen-Verwaltungseinheit ein Basisstationscontroller ist.

14. Computerprogrammprodukt, das in einen Speicher einer digitalen Computereinrichtung geladen werden kann, einschließlich Softwarecodeteilen zum Ausführen des Verfahrens nach einem der Ansprüche 1-13, wenn das Computerprogrammprodukt auf der Computereinrichtung ausgeführt wird.

15. Vorrichtung zum Steuern der Übertragung von Datenbits in einer Bittransfersitzung zum Übertragen von Dateninformation von einem Anwendungsserver (2) an einen Client (1), wobei die Bittransfersitzung Bittransfer über einen drahtlosen Kommunikationslink einschließt mittels eines Transportprotokolls mit einem Flusssteuerungsmechanismus, **dadurch gekennzeichnet, dass** die Vorrichtung in einer Netzeinheit (2,4) enthalten ist und dass die Vorrichtung enthält:
ein Empfangsmittel, das während der Sitzung von einer Funkressourcen-Verwaltungseinheit (6) Information über die Bandbreite auf dem drahtlosen Link kontinuierlich empfängt, den die Bittransfersitzung gegenwärtig benutzen darf; und
ein Parametereinstellmittel zum Aktualisieren von mindestens einem Parameter, der den Flusssteuerungsmechanismus des Transportprotokolls betrifft, als Antwort auf die empfangene Information, um die Übertragungsrate der Sitzung gemäß der empfangenen Information zu steuern.

16. Vorrichtung zum Steuern der Übertragung von Datenbits nach Anspruch 15, **dadurch gekennzeichnet, dass** das Empfangsmittel dazu angeordnet ist, die Information von der Funkressourcen-Verwaltungseinheit (6) jedes Mal dann zu erhalten, wenn sich die Bandbreite auf dem drahtlosen Link geändert hat, den die Bittransfersitzung benutzen darf.

17. Vorrichtung zum Steuern der Übertragung von Datenbits nach Anspruch 15, **dadurch gekennzeichnet, dass** das Empfangsmittel dazu angeordnet ist, die Information von der Funkressourcen-Verwaltungseinheit (6) in vorbestimmten Intervallen zu empfangen.

18. Vorrichtung zum Steuern der Übertragung von Datenbits nach einem der Ansprüche 15-17, **dadurch gekennzeichnet, dass** das Empfangsmittel und das Parametereinstellmittel im Anwendungsserver (2) enthalten sind.

19. Vorrichtung zum Steuern der Übertragung von Datenbits nach einem der Ansprüche 15-17, **dadurch gekennzeichnet, dass** die Bittransfersitzung zwischen dem Anwendungsserver (2) und dem Client
(1) über einen Proxy (4) aufgebaut wird und dass das Empfangsmittel und das Parametereinstellmittel im Proxy enthalten sind.

20. Vorrichtung zum Steuern der Übertragung von Datenbits nach Anspruch 19, **dadurch gekennzeichnet, dass** der Proxy (4) dazu angeordnet ist, Bestätigungen von Paketen zu senden, die vom Anwendungsserver (2) während der Bittransfersitzung empfangen wurden, wobei die Bestätigungen von der Information von der Funkressourcen-Verwaltungseinheit (6) abhängen.

21. Vorrichtung zum Steuern der Übertragung von Datenbits nach einem der Ansprüche 15-20, **dadurch gekennzeichnet, dass** das Empfangsmittel dazu angeordnet ist, die Information von der Funkressourcen-Verwaltungseinheit (6) über den Client (1) zu empfangen.

22. Vorrichtung zum Steuern der Übertragung von Datenbits nach einem der Ansprüche 15-21, **dadurch gekennzeichnet, dass** das Transportprotokoll das TCP ist.

23. Vorrichtung zum Steuern der Übertragung von Datenbits nach Anspruch 22, **dadurch gekennzeichnet, dass** der mindestens eine Parameter die TCP-Fenstergröße und/oder die TCP-Segmentgröße ist.

24. Vorrichtung zum Steuern der Übertragung von Datenbits nach einem der Ansprüche 15-23, **dadurch gekennzeichnet, dass** die Vorrichtung außerdem ein Mittel enthält, womit die zu übertragenden Daten während der Bittransfersitzung als Antwort auf die von der Funkressourcen-Verwaltungseinheit (6) empfangene Information transformiert werden.

25. Vorrichtung zum Steuern der Übertragung von Datenbits nach einem der Ansprüche 15-24, **dadurch gekennzeichnet, dass** das Parametereinstellmittel dazu angeordnet ist, den mindestens einen Parameter zu aktualisieren, sodass die Bandbreite auf dem drahtlosen Link, der durch die Bittransfersitzung genutzt wird, größer oder kleiner wird.

26. Vorrichtung zum Steuern der Übertragung von Datenbits nach einem der Ansprüche 15-25, **dadurch gekennzeichnet, dass** die Funkressourcen-Verwaltungseinheit ein Funknetzcontroller (6) ist.

27. Vorrichtung zum Steuern der Übertragung von Datenbits nach einem der Ansprüche 15-25, **dadurch gekennzeichnet, dass** die Funkressourcen-Verwaltungseinheit ein Basisstationscontroller ist.

28. System zum Steuern der Übertragung von Datenbits in einer Bittransfersitzung, das den Bittransfer über einen drahtlosen Kommunikationslink einschließt mittels eines Transportprotokolls mit einem Flusssteuerungsmechanismus, **dadurch gekennzeichnet, dass** das System Folgendes enthält:
eine Vorrichtung nach einem der Ansprüche 14-25 und
eine Funkressourcen-Verwaltungseinheit (6), die dazu angeordnet ist, während der Sitzung Information über die Bandbreite auf dem drahtlosen Link kontinuierlich zu senden, den die Bittransfersitzung gegenwärtig zum Empfangsmittel der Vorrichtung benutzen darf.

29. System zum Steuern der Übertragung von Datenbits nach Anspruch 27, **dadurch gekennzeichnet, dass** das System, außerdem eine Speichereinheit (7) enthält, dass die Funkressourcen-Verwaltungseinheit
(6) dazu angeordnet ist, Information über die Speichereinheit an die Vorrichtung zu senden und dass die Speichereinheit dazu angeordnet ist, die Information von der Funkressourcen-Verwaltungseinheit an die Vorrichtung weiterzureichen.

## Revendications

1. Procédé destiné à commander une transmission de bits de données dans une session de transfert de bits pour transmettre des informations relatives à des données d'un serveur d'application (2) à un client (1), ladite session de transfert de bits impliquant un transfert de bits sur une liaison de communication sans fil par le biais d'un protocole de transport avec un mécanisme de commande de flux **caractérisé par** les étapes dans lesquelles :
une entité de réseau (2, 4) reçoit (32, 34), de manière continue tout au long de ladite session, des informations provenant d'une unité de gestion de ressources radio (6) concernant la bande passante sur la liaison sans fil que la session de transfert de bits est actuellement autorisée à utiliser ; et
ladite entité de réseau met à jour (35) au moins un paramètre relatif au mécanisme de commande de flux du protocole de transport en réponse auxdites informations reçues, de manière à commander le débit de transmission de la session selon lesdites informations reçues.

2. Procédé destiné à commander une transmission de bits de données selon la revendication 1, **caractérisé en ce que** l'entité de réseau (2, 4) reçoit lesdites informations de l'unité de gestion de ressources radio à chaque fois que la bande passante sur la liaison sans fil que la session de transfert de bits est autorisée à utiliser est modifiée.

3. Procédé destiné à commander une transmission de bits de données selon la revendication 1, **caractérisé en ce que** l'entité de réseau (2, 4) reçoit lesdites informations de l'unité de gestion de ressources radio à des intervalles prédéterminés.

4. Procédé destiné à commander une transmission de bits de données selon l'une quelconque des revendications 1 à 3, **caractérisé en ce que** ladite entité de réseau est le serveur d'application (2).

5. Procédé destiné à commander une transmission de bits de données selon l'une quelconque des revendications 1 à 3, **caractérisé en ce que** ladite session de transfert de bits est établie entre le serveur d'application (2) et le client (1) par l'intermédiaire d'un serveur mandataire (4) et **en ce que** ladite entité de réseau est le serveur mandataire.

6. Procédé destiné à commander une transmission de bits de données selon la revendication 5, **caractérisé en ce que** ledit serveur mandataire (4) envoie des accusés de réception de paquets reçus à partir du serveur d'application (2) au cours de ladite session de transfert de bits et **en ce que** lesdits accusés de réception sont dépendants desdites informations reçues à partir de l'unité de gestion de ressources radio (6).

7. Procédé destiné à commander une transmission de bits de données selon l'une quelconque des revendications précédentes, **caractérisé en ce que** ladite entité de réseau (2, 4) reçoit lesdites informations à partir de l'unité de gestion de ressources radio (6) par l'intermédiaire du client (1).

8. Procédé destiné à commander une transmission de bits de données selon l'une quelconque des revendications précédentes, **caractérisé en ce que** ledit protocole de transport est le protocole TCP.

9. Procédé destiné à commander une transmission de bits de données selon la revendication 8, **caractérisé en ce que** ledit au moins un paramètre est la taille de fenêtre de protocole TCP et/ou la taille de segment de protocole TCP.

10. Procédé destiné à commander une transmission de bits de données selon l'une quelconque des revendications précédentes, **caractérisé en outre par** l'étape consistant à transformer les données à transmettre au cours de la session de transfert de bits en réponse auxdites informations reçues à partir de l'unité de gestion de ressources radio (6).

11. Procédé destiné à commander une transmission de bits de données selon l'une quelconque des revendications précédentes, **caractérisé par** l'étape consistant à mettre à jour ledit au moins un paramètre de sorte que la bande passante sur la liaison sans fil qui est utilisée par la session de transfert de bits augmente ou diminue.

12. Procédé destiné à commander une transmission de bits de données selon l'une quelconque des revendications précédentes, **caractérisé en ce que** l'unité de gestion de ressources radio est un contrôleur de réseau radio (6).

13. Procédé destiné à commander une transmission de bits de données selon l'une quelconque des revendications 1 à 11, **caractérisé en ce que** l'unité de gestion de ressources radio est un contrôleur de station de base.

14. Produit-programme informatique chargeable dans une mémoire d'un dispositif informatique numérique, comportant de parties de codes logiciels pour exécuter le procédé selon l'une quelconque des revendications 1 à 13, lorsque ledit produit-programme informatique est exécuté sur ledit dispositif informatique.

15. Dispositif destiné à commander une transmission de bits de données dans une session de transfert de bits pour transmettre des informations relatives à des données d'un serveur d'application (2) à un client (1), ladite session de transfert de bits impliquant un transfert de bits sur une liaison de communication sans fil par le biais d'un protocole de transport avec un mécanisme de commande de flux **caractérisé en ce que** le dispositif est inclus dans une entité de réseau (2, 4), et **en ce que** le dispositif comporte :
des moyens de réception pour recevoir, en continu tout au long de la session, des informations provenant d'une unité de gestion de ressources radio (6) concernant la bande passante sur la liaison sans fil que la session de transfert de bits est à ce moment autorisée à utiliser ; et
des moyens de configuration de paramètres pour mettre à jour au moins un paramètre relatif au mécanisme de commande de flux du protocole de transport en réponse auxdites informations reçues, de manière à commander le débit de transmission de la session selon lesdites informations reçues.

16. Dispositif destiné à commander une transmission de bits de données selon la revendication 15, **caractérisé en ce que** lesdits moyens de réception sont agencés pour recevoir lesdites informations à partir de l'unité de gestion de ressources radio (6) chaque fois que la bande passante sur la liaison sans fil que la session de transfert de bits est autorisée à utiliser est modifiée.

17. Dispositif destiné à commander une transmission de bits de données selon la revendication 15, **caractérisé en ce que** lesdits moyens de réception sont agencés pour recevoir lesdites informations à partir de l'unité de gestion de ressources radio (6) à des intervalles prédéterminés.

18. Dispositif destiné à commander une transmission de bits de données selon l'une quelconque des revendications 15 à 17, **caractérisé en ce que** lesdits moyens de réception et lesdits moyens de configuration de paramètres sont inclus dans le serveur d'application (2).

19. Dispositif destiné à commander une transmission de bits de données selon l'une quelconque des revendications 15 à 17, **caractérisé en ce que** ladite session de transfert de bits est établie entre le serveur d'application (2) et le client (1) par l'intermédiaire d'un serveur mandataire (4), et **en ce que** lesdits moyens de réception et lesdits moyens de configuration de paramètres sont inclus dans le serveur mandataire.

20. Dispositif destiné à commander une transmission de bits de données selon la revendication 19, **caractérisé en ce que** ledit serveur mandataire (4) est agencé pour envoyer des accusés de réception de paquets reçus à partir du serveur d'application (2) au cours de ladite session de transfert de bits, lesquels accusés de réception sont dépendants desdites informations en provenance de l'unité de gestion de ressources radio (6).

21. Dispositif destiné à commander une transmission de bits de données selon l'une quelconque des revendications 15 à 20, **caractérisé en ce que** lesdits moyens de réception sont agencés pour recevoir lesdites informations en provenance de l'unité de gestion de ressources radio (6) par l'intermédiaire du client (1).

22. Dispositif destiné à commander une transmission de bits de données selon l'une quelconque des revendications 15 à 21, **caractérisé en ce que** ledit protocole de transport est un protocole TCP.

23. Dispositif destiné à commander une transmission de bits de données selon la revendication 22, **caractérisé en ce que** ledit au moins un paramètre est la taille de fenêtre de protocole TCP et/ou la taille de segment de protocole TCP.

24. Dispositif destiné à commander une transmission de bits de données selon l'une quelconque des revendications 15 à 23, **caractérisé en ce que** le dispositif comporte en outre des moyens pour transformer les données à transmettre au cours de la session de transfert de bits en réponse auxdites informations en provenance de l'unité de gestion de ressources radio (6).

25. Dispositif destiné à commander une transmission de bits de données selon l'une quelconque des revendications 15 à 24, **caractérisé en ce que** lesdits moyens de configuration de paramètre sont agencés pour mettre à jour ledit au moins un paramètre de sorte que la bande passante sur la liaison sans fil qui est utilisée par la session de transfert de bits augmente ou diminue.

26. Dispositif destiné à commander une transmission de bits de données selon l'une quelconque des revendications 15 à 25, **caractérisé en ce que** l'unité de gestion de ressources radio est un contrôleur de réseau radio (6).

27. Dispositif destiné à commander une transmission de bits de données selon l'une quelconque des revendications 15 à 25, **caractérisé en ce que** l'unité de gestion de ressources radio est un contrôleur de station de base.

28. Système destiné à commander une transmission de bits de données dans une session de transfert de bits impliquant un transfert de bits sur une liaison de communication sans fil par le biais d'un protocole de transport avec un mécanisme de commande de flux **caractérisé en ce que** le système comporte :
un dispositif selon l'une quelconque des revendications 14 à 25 ; et
une unité de gestion de ressources radio (6) agencée pour envoyer, en continu tout au long de la session, des informations concernant la bande passante sur la liaison sans fil que la session de transfert de bits est à ce moment autorisée à utiliser, aux moyens de réception du dispositif.

29. Système destiné à commander une transmission de bits de données selon la revendication 27, **caractérisé en ce que** ledit système comporte en outre une unité de stockage (7), **en ce que** l'unité de gestion de ressources radio (6) est agencée pour envoyer lesdites informations audit dispositif via ladite unité de stockage et **en ce que** ladite unité de stockage est agencée pour relayer lesdites informations de l'unité de gestion de ressources radio audit dispositif.
